# EUROPEAN PATENT APPLICATION

(11) **EP 0 853 888 A1**
(43) Date of publication of application: **22.07.1998**
(21) Application number: 97200111.9
(22) Date of filing: 18.01.1997
(51) Int. Cl.: A23L 1/072, A23L 1/06

(54) **A dessert-product comprising a milk-based and a fruit-based component and a process for its manufacture**

(71) Applicant: SOCIETE DES PRODUITS NESTLE S.A., 1800 Vevey (CH)
(72) Inventor: Warendorf, Thomas, 84453 Muehldorf (DE)
(74) Representative: Thomas, Alain

(57) **Abstract**

The invention concerns a dessert-product comprising a milk-based component (2) and embedded in said component pieces (3) based on a compound taken from the group consisting of fruit puree, fruit juice, fruit granulates and their mixture, wherein said pieces comprise between 0.5 and 2 % of a low methoxylated pectin.

## Description

The invention concerns a dessert-product comprising a milk-based and a fruit-based component. The invention concerns further a process for the manufacture of said dessert-product.

A dessert-product comprising a milk-based and a fruit-based component is already known. For example, the US patents 2'910'365 and 4'096'286 concern a jelly made from an appropriate mixture of milk with a composition containing a low methoxylated pectin or alginate dispersed in fruit pulps, sugar, acids, organic salts and flavours. This jelly is intended to be used as preparations in households. As they are mixed with milk, these jellies are similar to fruit flavoured puddings, but they do not have a real flavour, texture and appearance of fruits. Further, there is no sensory distinction between the fruity and milky parts of the ingredients.

It is the object of the present invention to have a dessert-product with separated flavour, texture and appearance impressions, either of the fruits or other compounds or of the milk based dessert mass.

The invention concerns a dessert-product comprising a milk-based component and embedded in said component pieces based on a compound taken from the group consisting of fruit puree, fruit juice, fruit granulate and their mixture, wherein said pieces comprise between 0.5 and 2 % of a low methoxylated pectin.

The presence of the low methoxylated pectin in the said amount builds up a firm structure after a gelatine reaction reaction and gives for this second phase a certain viscosity, which is acceptable for proceeding in the manufacturing process. Pectin is a natural thickener and gelling agent extracted from plant tissues which consists of a glucuronic acid polymer chain. The acid residues of the polymer are partially esterified with methanol. Naturally, the degree of esterification varies between 30 and 80 %. With technological means, the degree of esterification can be modified from 0 to 100 %. The degree of esterification is important for the technological properties as thickener and gelling agent.

A low-methoxylated pectin means that up to 30 % of the acid residues are esterified with methanol. Therefore sufficient free acid groups remain for building up a polymer gel using intermolecular ionic bounds with bivalent cations like calcium or magnesium. A commercially available pectin is used, for example the product named SLENDID (Trade Mark, manufactured by Hercules-Copenhagen Pectin A/S).

The low methoxylated pectin used for the dessert-product according to the invention has a degree of methoxylation comprised between 0 and 30 %, preferably between 15 and 20 %. A too high degree of methoxylation does not give a polymer gel with bivalent cations as mentioned above.

The content of the low methoxylated pectin in the fruit phase varies between 0.5 and 2 %, preferably between 0.8 to 1.2 %. It depends from the desired texture, especially the firmness of the gelled fruit phase and from the interaction of the fruit components with the pectin on the gelling reaction.

A too low content of pectin does not bring the sufficient firmness to said phase and a too high amount gives a too high viscosity for allowing a good pumpability and after gellation an unpleasant hard and brittle consistency of the gelled fruit phase.

It is also possible according to the invention to add in the fruit phase a certain amount of alginate. Alginate is a natural thickener and gelling agent extracted from algae which consist of a polymer chain containing mannuronic and guluronic acid. Alginate forms in the same way a gel with bivalent cations like said low methoxylated pectin. Due to its lower affinity than pectin to calcium, alginate alone in the present invention does not produce a gel in following described procedure, which is essential to give distinct impressions of flavour, appearance and texture of the fruit phase to the milk phase. For modifying the gel texture less brittle and more smooth, the alginate can be blended to the pectin in amounts of 0.1 to 1.5 % of the fruit phase.

The milk-based component is absolutely necessary in the context of the present invention. Milk contains calcium and said calcium migrates in the said pieces, which results in a firm gel. The pieces are gelified in situ , because of the reaction between the low methoxylated pectin and the calcium, creating a firm gel : Immediately after the contact with the milk-based component, the reaction forms a skin around the pectin containing phase and prevents the mixing up of both phases.The time it takes finally for forming the gel is of the order of several hours, depending on the size of the pieces. The milk-based component has normally a content of calcium comprised between 0.5 and 2 g /kg . If the amount of calcium in the considered milk is not sufficient, it is also possible to add calcium. e.g. as calcium lactate, for reaching the above mentioned content. In all the present description, the % are given in weight.

In the dessert-product according to the invention, the milk-based component represents from 80 to 98 % and the pieces between 2 and 20 %. This ratio corresponds to a final product, wherein the pieces are well perceived by the consumer, without covering too much the milk component. It is clear that this ratio is not critical and could be changed.

The milk-based component is taken from the group consisting of a fermented milk, fresh cheese, curd and yoghurt or from the group of milk-based desserts consisting of a mousse, a pudding, a flan and a creme. The milk-based component can be whipped like a mousse which is a milk product which has been whipped with an overrun in the area of 100 %. It is also possible in order to achieve a different texture of the milk-based product to add a thickener. This thickener is taken from the group consisting of polysaccharides like a starch, guar and xanthan or other or from a gelatine.

The pieces embedded in the milk product are based on a compound taken from the group as mentioned above. The fruit puree is prepared by mashing said fruits at a small size and containing further sugar and water. The amount of fruit is comprised between 40 and 80 %, said of sugar is comprised between 0 and 30 % and said of water between 25 and 60 %. The type of fruit used is not critical and can be taken from the group consisting of pear, cherry, apricot, peaches, mango, strawberry, rapsberry, banana. The amount either of fruit, either of sugar depends on the desired flavour properties and on interactions preventing the gellation reaction. The fruit juice encompasses also a fruit juice concentrate. A fruit granulate means small pieces of a dried fruit.

Trisodium citrate can be also used to complex disturbing calcium residues in the fruit puree causing a precocious gellation reaction with the pectin . The amount of trisodium citrate is comprised between 0 and 0.2 %. Too high amounts of trisodium citrate can affect the gelling reaction by distracting the calcium from the desired gellation reaction A thickener may be added for adjusting the viscosity of the fruit phase to the technological required level. The thickener is present in an amount comprised between 0 and 3 % and is taken from the group consisting of a starch, guar and xanthan or other polysaccharides. For adjusting the pH of the fruit pieces, it is also possible to add a small amount of malic acid or lactic acid, or other food grade acid : this addition is comprised between 0 and 0.5 %.

It is possible according to the invention to obtain recombined fruit pieces with different flavour and texture properties giving a contrast to the surrounding milk-based component in an industrial dimensioned production.

The desired texture of the pieces can vary over a large range, depending on the amount of pectin, alginate and thickener in said pieces.

The shape and size of the pieces can have a large variation. Normally, the pieces are spherical, but can be also oval or droplets similar to small pears. The size of the pieces vary from 3 to 30 mm, most preferably between 5 and 10 mm.

The dessert-product according to the invention may be chilled or shelf stable.

The invention concerns further a process for the manufacture of the dessert-product. According to the process, it is possible to proceed in three different ways. By the first way, the two streams of the milk component and of the pieces component are joined and flow together. A pulsing valve provides a discrete injection of droplets of fruit phase into the stream of the milk phase. The gelling reaction builds a film around the fruit pieces preserving the shape during the further pipe transport and filling step. The result are fruit pieces with ellipsoid shape. The filling in the container is carried out by a current dosing unit. According to another embodiment, a strand of fruit phase is injected continuously, then cut for forming the pieces and filled as described.

All the process is carried out under aseptic or ultra-hygienic conditions.

It is important that both phases have been sterilised or pasteurised before the filling depending from the pH of the fruit pieces. If the pH of the milk-based dessert mass is below 4.8, a pasteurisation for 6 min at 92°C is sufficient. On the contrary, if the pH is above 4.8, a sterilisation of both phases has to be carried out. In this case, the mass for the formation of the pieces and containing the low-methoxylated pectin must be heated quickly to avoid a decomposition of the pectin and the alginate : it is for example heated at 140 °C for 20 seconds and cooled at 70 °C in 60 sec.

According to the second possibility, the filling of the milk phase and of the pieces occur separately : in this case, the milk phase is filled in the considered container with a first nozzle and at a second station, the pieces are fed with a second nozzle producing pieces of the desired size. A variation of the nozzle size, nozzle shape and the filling pressure provide specific shapes of the fruit pieces. With this method, the fruit pieces may be situated on the surface or within the dessert mass. In a third station, the cover is sealed on the top of the container.

According to the third possibility, both phases are extruded separately through two different nozzles, but simultaneously at one filling station into the container. Depending on the design of the filling nozzles and the time steps of the dosing of each phase distinct shapes of the fruit pieces in the milk component can be achieved.

The accompanying drawings show more precisely the features of the invention :

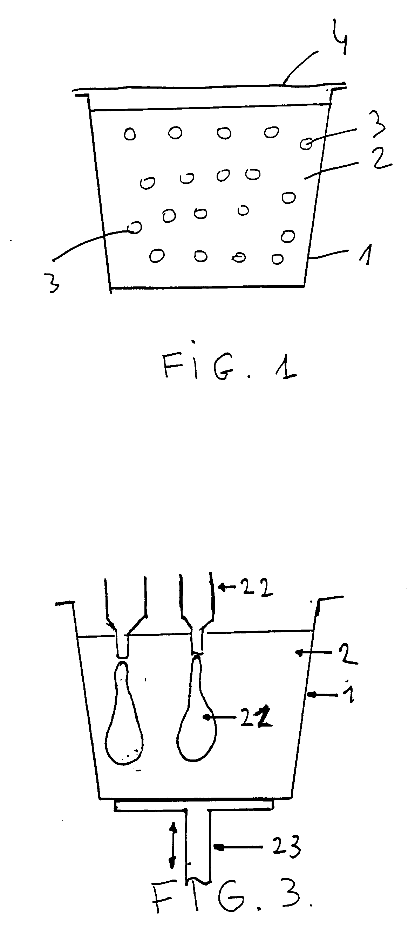

Fig. 1 shows a schematic view of the product of the invention,
Fig. 2 shows a schematic view of the system for carrying out the process in the first embodiment,
Fig. 3 shows a schematic view of the system in the second embodiment and
Fig. 4 shows a schematic view of the system in the third embodiment.

The container (1) has the two phases : the milk-based component (2), which is here a mousse having an overrun of 100 %, containing 1 g calcium/kg and fruit pieces containing 1 % of a low methoxylated pectin ( degree of methoxylation 15 % ). The pieces (3) have a size of 4 mm and they are present in an amount of 10 %. After filling, the container has been sealed by an aluminium lid (4).

The mousse and the fruit phase have been sterilised before the filling which has been carried out in an ultra-hygienic system. The fruit phase has a pH of 4.2. After the filling , the complete gellation of the fruit pieces occured in 10 hours. The product can be stored in the fridge (maximum storage temperature 12°C )during at least 6 weeks.

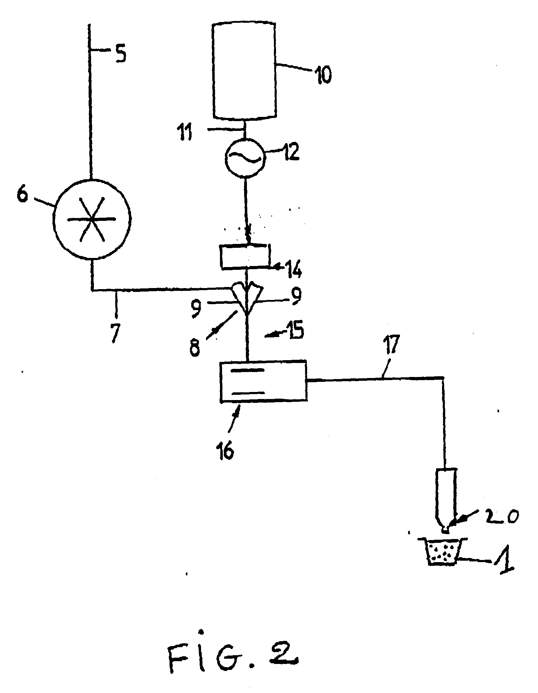

Considering now figure 2, the mixture based on milk treated by UHT, which forms the mousse phase (2), arrives through the line (5). This mixture is whipped with nitrogen in a whipping machine (6) so that an increase in volume of 100 % is obtained. The mousse (3) is delivered through the line (7) to the injection nozzle (8) which comprises two symmetrical feed passages (9).

The tank (10) is provided for the fruit phase. After sterilization, the fruit phase passes through the line (11) and is delivered by the pump (12) and passing the pulsing valve (14) to the injection nozzle (8).

A contact zone (15) is provided in the form of a cylindrical tube in which the strand of fruit flows simultaneously with the stream of mousse. A static labyrinth mixer (16) prevents the fruit droplets to stick together. The mixture of mousse and pieces of fruit is delivered through the line (17) to the ultrahygienic dosing unit and sealing station (20) into the container (1).

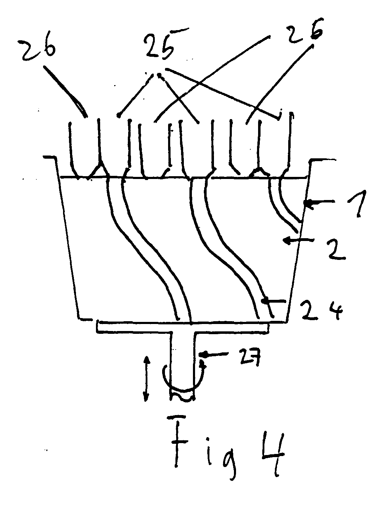

The second embodiment enables especially large fruit pieces. As shown in figure 3, the fruit phase (21) is filled into the forehand filled milk-based component (2). Variation of size and diameter of the filling nozzle (22) and the synchronisation to the stroke of the container lift (23) during this step allows the variation of the shape of the fruit phase, e.g. droplets like small pears. In the same way, it is possible to insert large fruit cores in the center of a dessert.

The third embodiment as shown in figure 4, is appropriate for filling e.g. strands of fruit phase giving the product a pattern of stripes. For this product, the content of pectin in the fruit preparation is adjusted for obtaining a slight texture difference between both phases. The fruit phase (24) is filled simultaneously with the milk-based component (2) into the container (1) by nozzles separated for the fruit phase and for the milk phase, these nozzles being respectively the nozzles (25) for the fruit phase and (26) for the milk phase. A rotating container lift (27) allows screw shaped stripes of fruit phase.

The invention provides several advantages, which are following :
- It is possible to form fruit pieces from fruits which can normally not be processed along a line, due to their natural weak structure, e.g. raspberries and banana.
- Different textures of the fruit pieces are possible, e.g. weak or firm, depending on the amount of added pectin.
- Different sizes are possible by one fruit variety.
- It is possible to have special designs of shape, e.g. berries, little pears, artificial shapes like large cores, strings or layers.
- Combination of fruits in one fruit preparation, e.g. apple and banana.
- Cost reduction in comparison to natural fruit pieces. Fruit puree and all the other ingredients are generally cheaper than natural fruit pieces. This advantage increases if the fruit phase is blended with puree of cheap fruit or fruit juice.

The invention will now be further explained by the following examples.

### Example 1.

The product according to the invention is prepared with a milk-based component being a vanilla cream or alternatively a chocolate cream.The vanilla cream contains skimmed milk, cream, sugar, starch, gelatine, and vanilla aroma. The chocolate cream contains skimmed milk, sugar, cocoa, starch, and thickener. Both creams have been sterilised at a temperature of 145 °C during 20 seconds by steam injection.

Different fruit compositions for obtaining fruit pieces with different textures have been tried according to following table :

| Ingredients (%) | Pear (small pieces) | Pear (large pieces, pear shaped) | Cherry (soft gel core) |
|---|---|---|---|
| Fruit juice concentrate 65° Brix | 0.05 | 0.05 | 8 |
| Fruit puree | 60 | 40 | 0 |
| Dried fruit granulate | 0 | 4 | 0 |
| Aroma | 0 | 0 | 0.3 |
| Colours | 0 | 0 | 0 |
| Sugar | 12 | 10 | 15 |
| Modified starch | 0 | 0 | 2 |
| Trisodium citrate | 0.2 | 0.2 | 0.2 |
| Malic acid | 0.6 | 0.4 | 0 |
| Guar gum | 0 | 0 | 0.2 |
| Pectin | 1.2 | 1.2 | 0.9 |
| Alginate | 0.5 | 0.3 | |
| Demineralized water | 25.85 | 43.85 | 73.2 |

### Example 2

The product according to the invention is prepared with a milk-based component being fermented yoghurt which has been whipped to an overrun of 80 %. This yoghurt contains skimmed milk, sugar, thickener, emulsifier, gelatine and starter culture. It has been pasteurised at a temperature of 92 °C during 6 minutes by a tube heat exchanger.

Different fruit compositions has been tried according to following table :

| Ingredients (%) | Apricot | Cherry | Mango | Strawberry |
|---|---|---|---|---|
| Fruit puree | 60 | 40 | 60 | 60 |
| Aroma | 0.25 | 0.1 | 0.15 | 0.1 |
| Colours | 0.03 | 0 | 0.03 | 0.03 |
| Sugar | 10 | 15 | 8 | 8 |
| Modified Starch | 0 | 0 | 2 | 2 |
| Trisodium citrate | 0.2 | 0.2 | 0.2 | 0.2 |
| Guar gum | 0 | 0.2 | 0.3 | 0.3 |
| Pectin | 0.1 | 1.0 | 0.75 | 1.0 |
| Alginate | 0.5 | 0.5 | 0.75 | 0.5 |
| Demineralized water | 28.02 | 41.0 | 27.55 | 27.85 |

### Example 3

### Mixed fruits

The product according to the invention is prepared with a milk-based component being a yoghurt as desctibed above, but without whipping.

Different fruit compositions containing a mixture of fruits has been tried according to following table :

| Ingredients (%) | Peach-Apple | Raspberry-Apple | Banana-Apple |
|---|---|---|---|
| Fruit puree | 30 | 30 | 40 |
| Apple puree | 30 | 30 | 20 |
| Aroma | 0.2 | 0.2 | 0.25 |
| Colours | 0.03 | 0.03 | 0 |
| Sugar | 12 | 12 | 8 |
| Ascorbic acid | 0 | 0 | 0.1 |
| Modified starch | 0 | 0 | 2 |
| Trisodium citrate | 0.2 | 0.2 | 0.2 |
| Guar gum | 0.3 | 0.3 | 0.3 |
| Pectin | 1.0 | 1.0 | 1.3 |
| Alginate | 0.5 | 0.5 | 0 |
| Demineralized water | 25.77 | 25.77 | 27.85 |

All fruit compositions has been sterilised and filled with the above milk component with the device according to figure 2 and 3. A product is manufactured containing 15 % of fruit pieces having a size of 5 mm and 20 mm diameter. After a storage of 6 weeks, the product was tested and the fruit pieces retain their spherical form and were not too hard and not too soft.

## Claims

1. A dessert-product comprising a milk-based component and embedded in said component pieces based on a compound taken from the group consisting of fruit puree, fruit juice, fruit granulates and their mixture, wherein said pieces comprise between 0.5 and 2 % of a low methoxylated pectin.

2. A dessert-product according to claim 1, wherein the said pieces contain 0.1 to 1.5 % of alginate.

3. A dessert-product according to any of claims 1 or 2, wherein it contains between 80 and 98 % of the milk-based component and between 2 and 20 % of pieces.

4. A dessert-product according to any of claims 1 to 3, wherein the pectin has a degree of methoxylation comprised between 0 and 30 %.

5. A dessert-product according to any of claims 1 to 4, wherein the milk-based component is taken from the group consisting of a mousse, a fermented milk, a pudding , a yoghurt, a flan, a cream.

6. A dessert-product according to any of claims 1 to 5, wherein the milk-based component contains between 0.5 and 2 g of calcium/kg.

7. A dessert-product according to any of claims 1 to 6, wherein the pieces have a size comprised between 3 and 30 mm, preferably between 3 and 7 mm.

8. A dessert-product according to any of claims 1 to 7, wherein the milk-based component contains further a thickener.

9. A dessert-product according to any of claims 1 to 8, wherein the pieces contain further between 0 and 0.2 % of trisodium citrate, between 0 and 0.5 % alginate, between 0 and 2.5 % of a thickener and from 0 to 20 % of sugar.

10. A dessert-product according to claims 8 or 9, wherein the thickener is taken from the group consisting of a starch, guar and xanthan.

11. A dessert-product according to any of claims 1 to 10, wherein the compound on which the pieces are based is present in an amount comprised between 40 and 80 %.

12. A process for the manufacture of the dessert-product according to any of claims 1 to 11, wherein the filling of both phases occurs separately, simultaneously with two joined streams or simultaneously with two separated streams and said phases are sterilised or pasteurised separately before reaching the aseptic or ultra-hygienic filling system.
